# EUROPÄISCHE PATENTSCHRIFT

(11) **EP 2 255 072 B1**
(45) Veröffentlichungstag und Bekanntmachung des Hinweises auf die Patenterteilung: **06.05.2015**
(21) Anmeldenummer: 09725277.9
(22) Anmeldetag: 12.03.2009
(51) Int. Cl.: F01D 5/18, F01D 9/04

(54) **LEITSCHAUFEL FÜR EINE GASTURBINE SOWIE GASTURBINE MIT EINER SOLCHEN LEITSCHAUFEL**
GUIDE VANE FOR A GAS TURBINE AND GAS TURBINE COMPRISING SUCH A GUIDE VANE
AUBE DIRECTRICE POUR TURBINE À GAZ ET TURBINE À GAZ DOTÉE D'UNE AUBE DIRECTRICE DE CE TYPE

(30) Priorität: 28.03.2008 CH 4692008
(43) Veröffentlichungstag der Anmeldung: 01.12.2010
(73) Patentinhaber: ALSTOM Technology Ltd, 5400 Baden (CH)
(72) Erfinder: DÜCKERSHOFF, Roland, 56203 Höhr-Grenzhausen (DE); NAIK, Shailendra, CH-5412 Gebenstorf (CH); SCHNIEDER, Martin, CH-5408 Ennetbaden (CH)
(86) Internationale Anmeldenummer: PCT/EP2009/052897
(87) Internationale Veröffentlichungsnummer: WO 2009/118245

(56) Entgegenhaltungen:
- EP-A- 1 223 308
- EP-A- 1 469 163
- EP-A- 1 715 139
- EP-A- 1 849 961
- EP-A2- 1 010 859
- WO-A-95/14848
- WO-A-2005/095761
- US-A- 4 236 870
- US-A- 5 488 825
- US-A1- 2005 281 674
- US-B1- 6 183 194

## Beschreibung

### Technisches Gebiet

Die vorliegende Erfindung bezieht sich auf das Gebiet der Gasturbinen. Sie betrifft eine Leitschaufel für eine Gasturbine gemäss dem Oberbegriff des Anspruchs 1.

### Stand der Technik

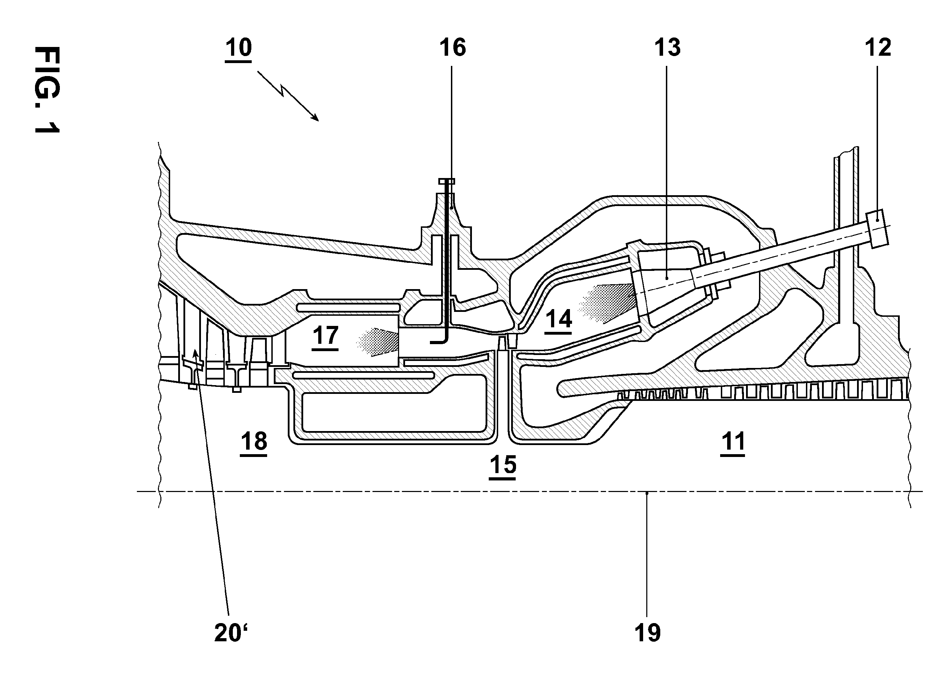

Grosse stationäre Gasturbinen mit sequentieller Verbrennung haben sich im industriellen Einsatz bewährt. Bei diesen Gasturbinen sind in Strömungsrichtung zwei Brennkammern hintereinander angeordnet und je eine zugeordnete Turbine, welche mit dem in der jeweiligen Brennkammer erzeugten Heissgas beaufschlagt werden. Derartige Gasturbinen, die z.B. von der Anmelderin unter der Typenbezeichnung GT24/26 angeboten werden, sind beispielsweise in der Druckschrift Joos F. et al., "Field experience with the sequential combustion system of the GT24/26 gas turbine family", ABB Review 5/1998, S.12-20 (1998), beschrieben. Die dortige Abb. 1 ist in der vorliegenden Anmeldung als Fig. 1 wiedergegeben. Eine weitere Beschreibung einer solchen Gasturbine geht des Weiteren aus EP-B1-0 620 362 hervor.

Fig. 1 zeigt eine Gasturbine 10 mit sequentieller Verbrennung, bei der entlang einer Achse 19 ein Verdichter 11, eine erste Brennkammer 14, eine Hochdruckturbine 15, eine zweite Brennkammer 17 und eine Niederdruckturbine 18 der Reihe nach angeordnet sind. Summarisch lässt sich diese Gasturbine wie folgt darlegen: Der Verdichter 11 und die beiden Turbinen 15 (HD), 18 (ND) sind Teil eines Rotors, der um die Achse 19 dreht. Der Verdichter 11 verdichtet die angesaugte Luft, wobei diese verdichtete Luft dann in ein Plenum strömt und von dort aus in die erste Brennkammer. Diese Brennkammer wird mit

Vormischbrennern betrieben, wie sie beispielsweise aus EP-A1-0 321 809, des Weiteren aus EP-A2-0 704 657 hervorgehen. Die verdichtete Luft strömt in die Vormischbrenner, wo die Vermischung mit mindestens einem Brennstoff stattfindet. Dieses Brennstoff/Luft-Gemisch strömt dann in die erste Brennkammer 14 ein, in welche dieses Gemisch unter Bildung einer stabilen Flammenfront zur Verbrennung gelangt. Das so entstehende Heissgas wird in der anschliessenden Hochdruckturbine 15 unter Arbeitsleistung teilweise entspannt und strömt sodann in die zweite Brennkammer 17 ein, wo eine weitere Brennstoffzufuhr 16 stattfindet.

Durch die hohen Temperaturen, welche das in der Hochdruckturbine 15 teilentspannte Heissgas immer noch aufweist, findet in der zweiten Brennkammer 17 eine Verbrennung statt, welche auf Selbstzündung beruht. Das in der zweiten Brennkammer 17 nacherhitzte Heissgas wird dann in einer mehrstufigen Niederdruckturbine 18 entspannt, in der hintereinander abwechselnd Schaufelreihen aus Laufschaufeln und Leitschaufeln angeordnet sind.

In der bekannten Gasturbine aus Fig. 1 sind die Leitschaufeln 20' als gerade Schaufeln ausgebildet, die durch eine interne Kühlung charakterisiert sind. Die Hinterkante wird durch das zum Einsatz kommende Kühlmedium, in den meisten Fällen durch Kühlluft, gekühlt, wobei diese Kühlluft dann zumindest teilweise durch in die Schaufelhinterkante gebohrte Löcher ausgeblasen wird. Durch den geraden Verlauf der Leitschaufel und die darauf abgestimmte Kühlung mittels eines Prallkühleinsatzes ergeben sich allerdings Beschränkungen im Wirkungsgrad, deren Überwindung bei der Auslegung der Gasturbine Vorteile brächte.

US 5 488 825 offenbart eine gattungsgemäße, gekühlte Leitschaufel, die in radialer Richtung eine im Raum stark gekrümmte Form aufweist, wobei die Kühlkanäle in radialer Richtung der Krümmung der Leitschaufel folgen. Die Kühlung soll aber weiter optimiert werde.

### Darstellung der Erfindung

Hier will die Erfindung Abhilfe schaffen. Es ist daher Aufgabe der Erfindung, eine Leitschaufel zu schaffen, welche die Beschränkungen der bekannten Leitschaufeln überwindet und eine Steigerung im Wirkungsgrad der Gasturbine ermöglicht.

Die Aufgabe wird durch die Gesamtheit der Merkmale des Anspruchs 1 gelöst. Wesentlich für die Erfindung ist, dass das Schaufelblatt der Leitschaufel in radialer Richtung eine im Raum auch bisweilen stark gekrümmte Form aufweist, dass im Inneren des Schaufelblatts drei in radialer Richtung verlaufende Kühlkanäle in Richtung des Heissgasstromes hintereinander angeordnet und durch an den Enden des Schaufelblattes angeordnete Umlenkbereiche so miteinander verbunden sind, dass das Kühlmedium die Kühlkanäle nacheinander in wechselnder Richtung durchströmt, und dass die Kühlkanäle in radialer Richtung der Krümmung des Schaufelblattes im Raum folgen. Durch die stark gekrümmte Form des Schaufelblattes wird die Wechselwirkung mit dem Heissgasstrom der Gasturbine deutlich verbessert. Die der äusseren Form des Schaufelblattes folgende Ausgestaltung der Kühlkanäle ermöglicht dabei eine verbesserte Kühlung der thermisch hochbelasteten Sektoren der Leitschaufel.

Eine Ausgestaltung der Erfindung ist dadurch gekennzeichnet, dass der Eingang des ersten Kühlkanals über einen durch die Deckplatte hindurch reichenden Kühllufteintritt mit dem oberhalb der Deckplatte liegenden Aussenraum in Verbindung steht, und dass im Bereich des Kühllufteintritts ein Drosselelement zur Drosselung des durch den Kühllufteintritt strömenden Kühlmedium-Massenstroms angeordnet ist. Die eingangsseitige Drosselung des durch die Schaufel strömenden Kühlmediumstromes mittels eines eigenständigen Drosselelements ermöglicht die präzise Einstellung des Kühlstromes und vermeidet so unnötige Verluste, welche sich auf den Wirkungsgrad negativ auswirken.

Vorzugsweise weist das Drosselelement die Form einer durch eine oder mehrere Öffnungen versehenen Platte auf, wobei das Drosselelement den Eingang des Kühllufteintritts verschliesst, das Drosselelement in die Deckplatte eingelötet ist. Deckplatte anschliesst. Hierdurch ergibt sich eine vereinfachte Einstellbarkeit des Kühlstromes..

Eine andere Ausgestaltung zeichnet sich dadurch aus, dass das Ende des ersten Kühlkanals mit dem Anfang des zweiten Kühlkanals durch einen ersten Umlenkbereich verbunden ist, und dass die Querschnittsfläche am Eingang des zweiten Kühlkanals grösser ist als die Querschnittsfläche am Ausgang des ersten Kühlkanals, wobei vorzugsweise das Verhältnis der Querschnittsfläche am Eingang des zweiten Kühlkanals zur Querschnittsfläche am Ausgang des ersten Kühlkanals etwa 1,6 beträgt.

Gemäss einer weiteren Ausgestaltung der Erfindung ist das Ende des zweiten Kühlkanals mit dem Anfang des dritten Kühlkanals durch einen zweiten Umlenkbereich verbunden ist, wobei am zweiten Umlenkbereich eine Drosselvorrichtung zur gesteuerten Entnahme von Kühlmedium für die Kühlung der Deckplatte und eines Teils der Schaufelhinterkante vorgesehen ist, und die Querschnittsfläche am Eingang des dritten Kühlkanals kleiner ist als die Querschnittsfläche am Ausgang des zweiten Kühlkanals. Das Verhältnis der Querschnittsfläche am Eingang des dritten Kühlkanals zur Querschnittsfläche am Ausgang des zweiten Kühlkanals beträgt dabei vorzugsweise etwa 0,9.

Die Drosselvorrichtung umfasst mit Vorteil mehrere quer zur Durchlassrichtung orientierte Rippen.

Insbesondere ist zum Führen der Strömung im ersten Umlenkbereich ein Umlenkelement vorgesehen, das von dem Ende des ersten Kühlkanals bis zum Anfang des zweiten Kühlkanals verlaufendes bogenförmiges Umlenkelement angeordnet ist, wobei das Umlenkelement die Querschnittsfläche am Ausgang des ersten Kühlkanals und die Querschnittsfläche am Eingang des zweiten Kühlkanals jeweils in zwei Teilflächen von etwa 33% und 66% der Gesamtfläche unterteilt.

Weiterhin sind mit Vorteil zum Führen der Strömung, soweit drei Kühlkanäle vorgesehen sind, im zweiten Umlenkbereich zwei zwischen dem Ende des zweiten Kühlkanals und dem Anfang des dritten Kühlkanals verlaufende bogenförmige Umlenkelemente angeordnet, wobei die Umlenkelemente die Querschnittsfläche ab der Mitte des zweiten Umlenkbereiches in drei Teilflächen von jeweils etwa 33% der Gesamtfläche und die Querschnittsfläche am Eingang des dritten Kühlkanals in drei Teilflächen von etwa 36%, 36% und 28% der Gesamtfläche unterteilen.

Erfindungsgemäß stehen die Querschnittsflächen der drei Kühlkanäle auf halber Höhe der Leitschaufel in einem Verhältnis von 1:2:1.

Gemäss einer weiteren Ausgestaltung erstreckt sich das Schaufelblatt in Richtung des Heissgasstromes zwischen einer Vorderkante und einer Hinterkante und weist eine Druckseite und eine Saugseite auf, wobei auf der Druckseite vor der Hinterkante ein parallel zur Hinterkante verlaufender Kühlschlitz vorgesehen ist, durch welchen das Kühlmedium über die gesamte Länge der Leitschaufel aus dem dritten Kühlkanal austreten und die Hinterkante der Leitschaufel kühlen kann.

Vorzugsweise sind zur Einstellung des Kühlstromes durch den Kühlschlitz im Kühlschlitz in Längsrichtung verteilt sogenannte Steuerelemente vorgesehen, die wenigstens zwei unterschiedliche Formen, insbesondere eine kreisrunde und eine tropfenartige, aufweisen und in Längsrichtung einfach oder mehrfach alternierend angeordnet sind.

Darüber hinaus kann zwischen dem zweiten Umlenkbereich und dem Kühlschlitz eine Drosselvorrichtung zur gesteuerten Entnahme von Kühlmedium für die Kühlung der Deckplatte vorgesehen sein, die mehrere quer zur Durchlassrichtung orientierte Rippen umfasst.

Erfindungsgemäß weist der dritte Kühlkanal eine in radialer Richtung von aussen nach innen abnehmende Querschnittsfläche auf, und ist die Rate der Abnahme der Querschnittsfläche von aussen nach innen über die ersten 70% der Kanallänge geringer als über die letzten 30%.

Auch können in den Kühlkanälen zur Verbesserung der Kühlwirkung Turbulator-Rippen angeordnet sein, die insbesondere schräg zur Strömungsrichtung in den Kühlkanälen angeordnet sind.

Vorzugsweise weisen der erste Kühlkanal einen zur Vorderkante spitz zulaufenden dreieckigen Querschnitt, der zweite Kühlkanal einen rechteckigen Querschnitt und der dritte Kühlkanal einen zur Hinterkante spitz zulaufenden dreieckigen Querschnitt auf, wobei die Turbulator-Rippen in dem ersten und dritten Kühlkanal zur Vorderkante bzw. Hinterkante hin flacher werden, und die Turbulator-Rippen in dem zweiten Kühlkanal eine konstante Höhe aufweisen.

Schliesslich können im Kühlschlitz zur Verbesserung des Wärmeübergangs in der Fläche verteilt Nocken vorgesehen sein.

Mit Vorteil kann die Leitschaufel nach der Erfindung in einer Gasturbine eingesetzt werden, wobei die Gasturbine mit sequentieller Verbrennung ausgestattet ist und in Strömungsrichtung hintereinander zwei Brennkammern mit jeweils einer nachfolgenden Turbine aufweist, und die erfindungsgemässe Leitschaufel vorzugsweise in der zweiten Turbine angeordnet ist.

Die zweite Turbine ist insbesondere so ausgelegt, dass hintereinander mehrere Reihen von Leitschaufeln vorgesehen werden, wobei die erfindungsgemässe Leitschaufel in axialer Strömungsrichtung in einer mittleren Leitschaufelreihe angeordnet ist.

### Kurze Erläuterung der Figuren

Die Erfindung soll nachfolgend anhand von Ausführungsbeispielen im Zusammenhang mit der Zeichnung näher erläutert werden. Alle für das unmittelbare Verständnis der Erfindung nicht erforderlichen Elemente sind weggelassen worden. Gleiche Elemente sind in den verschiedenen Figuren mit den gleichen Bezugszeichen versehen. Die Strömungsrichtung ist mit Pfeilen angegeben. Es zeigen:
- Fig. 1: den prinzipiellen Aufbau einer Gasturbine mit sequentieller Verbrennung nach dem Stand der Technik,
- Fig. 2: in einer Seitenansicht eine Leitschaufel einer Gasturbine mit sequentieller Verbrennung nach Fig. 1 gemäss einem bevorzugten Ausführungsbeispiel der Erfindung, und
- Fig. 3: den Längsschnitt durch die Leitschaufel gemäss Fig. 2.

### Wege zur Ausführung der Erfindung

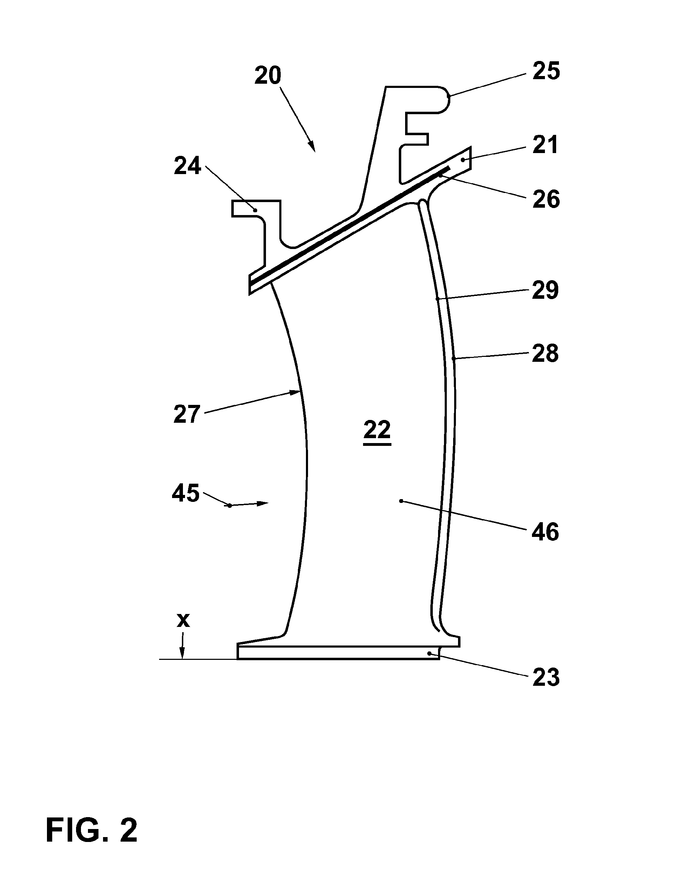

In Fig. 2 ist in einer seitlichen Aussenansicht eine Leitschaufel, welche hier gemäss einem bevorzugten, aber nicht ausschliesslichen Ausführungsbeispiel der Erfindung für die Niederdruckturbine einer Gasturbine bestimmt ist, wobei die Gasturbine mit sequentieller Verbrennung betrieben wird.. Die Leitschaufel 20 umfasst eine im Raum bisweilen stark gekrümmtes Schaufelblatt 22, dass sich in Längsrichtung (in radialer Richtung der Gasturbine) zwischen einem Schaufelkopf 23 und einer Deckplatte 21 erstreckt und in Richtung des Heissgasstromes 45 von einer Vorderkante 27 bis zu einer Hinterkante 28 reicht. Zwischen den beiden Kanten 27 und 28 ist das Schaufelblatt 22 nach aussen durch eine Druckseite (in Fig. 2 dem Betrachter zugewandt) und eine (gegenüberliegende) Saugseite begrenzt. Auf der Druckseite ist kurz vor der Hinterkante 28 ein parallel zur Hinterkante 28 verlaufender Kühlschlitz 29 angeordnet, durch welchen Kühlluft aus dem Schaufelinneren nach aussen tritt und den Schaufelbereich zwischen Kühlschlitz 29 und Hinterkante 28 und die Hinterkante 28 selbst kühlt. Die Leitschaufel 20 ist mittels der auf der Oberseite der Deckplatte 21 ausgebildeten hakenförmigen Befestigungselemente 24 und 25 am Turbinengehäuse befestigt, während sie mit dem Schaufelkopf 23 dichtend am Rotor anliegt. In den Seitenflächen der Deckplatte 21 sind Dichtungsnuten 26 angeordnet, die Streifendichtungen zur Abdichtung der Spalte zwischen benachbarten Leitschaufeln aufnehmen.

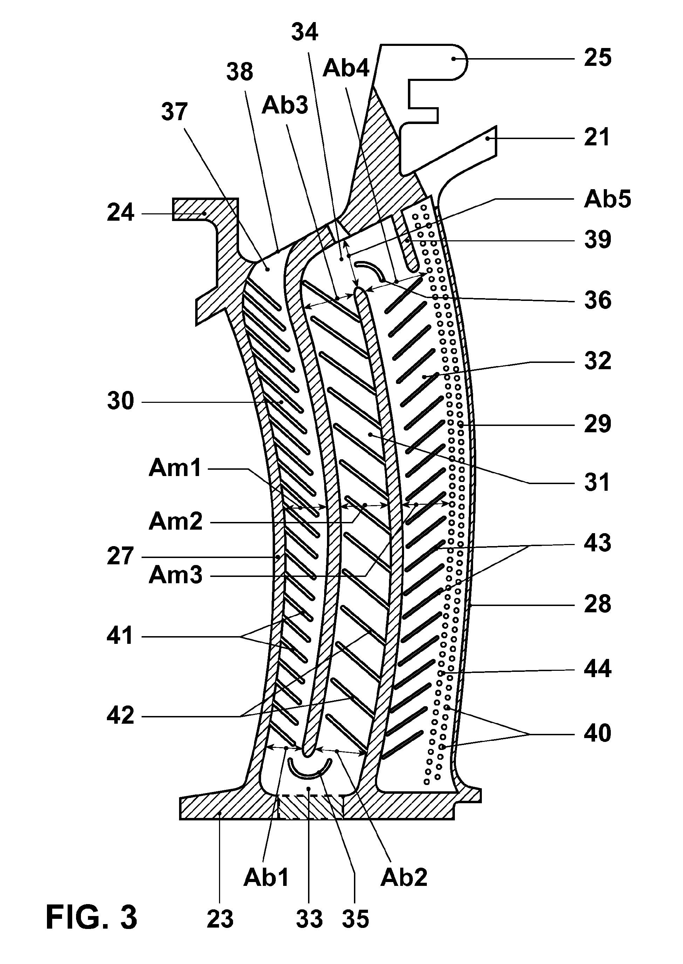

Der innere Aufbau der Leitschaufel 20 ist in Fig. 3 dargestellt: Das Schaufelblatt wird in Längsrichtung von drei Kühlkanälen 30, 31 und 32 durchzogen, die der Krümmung des Schaufelblattes im Raum folgen und in Richtung des Heissgasstromes 45 hintereinander angeordnet und durch an den Enden des Schaufelblattes angeordnete Umlenkbereiche 33, 34 so miteinander verbunden sind, dass das Kühlmedium die Kühlkanäle 30, 31, 32 nacheinander in wechselnder Richtung durchströmt. Das Ende des ersten Kühlkanals 30 ist mit dem Anfang des zweiten Kühlkanals 31 durch den ersten Umlenkbereich 33 verbunden. Die Querschnittsfläche Ab2 am Eingang des zweiten Kühlkanals 31 ist dabei grösser ist als die Querschnittsfläche Ab1 am Ausgang des ersten Kühlkanals 30. Vorzugsweise beträgt das Verhältnis der Querschnittsfläche Ab2 am Eingang des zweiten Kühlkanals 31 zur Querschnittsfläche Ab1 am Ausgang des ersten Kühlkanals 30 etwa 1,6.

Das Ende des zweiten Kühlkanals 31 ist mit dem Anfang des dritten Kühlkanals 32 durch den zweiten Umlenkbereich 34 verbunden. Die Querschnittsfläche Ab4 am Eingang des dritten Kühlkanals 32 ist dabei kleiner als die Querschnittsfläche Ab3 am Ausgang des zweiten Kühlkanals 31. Vorzugsweise beträgt das Verhältnis der Querschnittsfläche Ab4 am Eingang des dritten Kühlkanals 32 zur Querschnittsfläche Ab3 am Ausgang des zweiten Kühlkanals 31 etwa 0,9. Dieses spezielle Verhältnis ist gewählt, um die Verringerung des Kühlluftstromes vom zweiten zum dritten Kühlkanal zu kompensieren. Zwischen dem zweiten Umlenkbereich 34 und dem Kühlschlitz 29 ist eine Drosselvorrichtung 39 zur gesteuerten Entnahme von Kühlmedium für die Kühlung der äusseren Plattform 21 und eines Teils der Hinterkante 28 vorgesehen, die im Ausführungsbeispiel mehrere quer zur Durchlassrichtung orientierten Rippen umfasst. Durch den Kühlschlitz 29 kann dabei das Kühlmedium über die gesamte Länge der Leitschaufel 20 aus dem dritten Kühlkanal 32 austreten und die Hinterkante 28 der Leitschaufel 20 kühlen.

Zum Führen der Strömung in den hintereinander geschalteten Kühlkanälen 30, 31, 32 ist im ersten Umlenkbereich 33 ein vom Ende des ersten Kühlkanals 30 bis zum Anfang des zweiten Kühlkanals 31 verlaufendes bogenförmiges Umlenkelement 35 angeordnet. Das Umlenkelement 35 ist im ersten Umlenkbereich 33 so platziert, dass es die Querschnittsfläche Ab1 am Ausgang des ersten Kühlkanals 30 und die Querschnittsfläche Ab2 am Eingang des zweiten Kühlkanals 31 jeweils in zwei Teilflächen von etwa 33% und 66% der Gesamtfläche unterteilt.

Entsprechend sind zum Führen der Strömung im zweiten Umlenkbereich 34 zwei zwischen der Mitte des zweiten Umlenkbereiches und dem Anfang des dritten Kühlkanals 32 annähernd parallel verlaufende bogenförmige Umlenkelemente 36 angeordnet. Diese Umlenkelemente 36 sind im zweiten Umlenkbereich 34 so angeordnet, dass sie die Querschnittsfläche in der Mitte des zweiten Umlenkbereiches 34 am Ausgang des zweiten Kühlkanals 31 in drei Teilflächen von jeweils etwa 33% der Gesamtfläche und die Querschnittsfläche Ab4 am Eingang des dritten Kühlkanals 32 in drei Teilflächen von etwa 36%, 36% und 28% der Gesamtfläche unterteilen.

Die Querschnittsflächen Am1 ,..,Am3 der drei Kühlkanäle 30, 31, 32 auf halber Höhe (in der Mitte) der Leitschaufel 20 stehen aus Gründen der optimierten Kühlung in einem Verhältnis von 1:2:1. Der dritte Kühlkanal 32 hat eine in radialer Richtung von aussen nach innen abnehmende Querschnittsfläche, wobei die Rate der Abnahme der Querschnittsfläche von aussen nach innen über die ersten 70% der Kanallänge geringer ist als über die letzten 30%.

Durch diese Dimensionierungsmassnahmen für die Kühlkanäle wird eine optimale Kühlung der erfindungsgemässen gekrümmten Schaufel erreicht.

Der Eingang des ersten Kühlkanals 30 steht über einen durch die äussere Plattform 21 hindurch reichenden Kühllufteintritt 37 mit dem oberhalb der äusseren Plattform 21 liegenden Aussenraum in Verbindung. Im Bereich des Kühllufteintritts 37 ist ein spezielles Drosselelement 38 zur Drosselung des durch den Kühllufteintritt 37 strömenden Kühlmedium-Massenstroms angeordnet. Das Drosselelement 38 hat die Form einer durch eine oder mehrere Öffnungen versehenen Platte. Es ist in die äussere Plattform 21 eingelötet und verschliesst den Eingang des Kühllufteintritts 37.

Am anderen Ende des Kühlsystems sind im Kühlschlitz 29 zur Einstellung des Kühlstromes durch den Kühlschlitz 29 in Längsrichtung verteilt Blockierelemente 40 angeordnet. Die Steuerungselemente 40 treten in der Figur in zwei unterschiedliche Formen auf, nämlich in eine kreisrunde und in eine tropfenformartige Konfigurationen, wobei diese Konfigurationen nicht ausschliesslich zu verstehen sind. Beide Formen sind in Längsrichtung einfach oder nach Bedarf auch mehrfach alternierend im Kühlschlitz 29 angeordnet, wobei die tropfenförmigen jeweils auf den lokalen Heissgasstrom ausgerichtet sind. In Strömungsrichtung vor den Blockierelementen 40 sind im Kühlschlitz 29 zur Verbesserung des Wärmeübergangs in der Fläche verteilt Nocken 44 vorgesehen. In radialer Richtung haben die Nocken 40 einen konstanten Abstand, während der axiale Abstand sich ändert und in der Mitte der Schaufel minimal ist, während er zu den endseitigen Abschlussflächen 21 und 23 der Leitschaufel hin zunimmt. Dies steht in Einklang mit dem Temperaturprofil des Heissgasstroms 45, das in der Mitte der Schaufel ein Maximum aufweist und zu den endseitigen Abschlussflächen hin abfällt.

Ebenfalls zur Verbesserung der Kühlwirkung sind in den Kühlkanälen 30, 31, 32 Turbulator-Rippen 41, 42, 43 angeordnet. Die Turbulator-Rippen 41, 42, 43 sind schräg zur Strömungsrichtung in den Kühlkanälen 30, 31, 32 orientiert.

In Übereinstimmung mit dem Flügelprofil der Schaufel hat der erste Kühlkanal 30 einen zur Vorderkante 27 spitz zulaufenden dreieckigen Querschnitt, der zweite Kühlkanal 31 einen rechteckigen Querschnitt und der dritte Kühlkanal einen zur Hinterkante 28 spitz zulaufenden dreieckigen Querschnitt. Entsprechend werden die Turbulator-Rippen 41, 43 in dem ersten und dritten Kühlkanal 30, 32 zur Vorderkante 27 bzw. Hinterkante 28 hin flacher, während die Turbulator-Rippen 42 in dem zweiten Kühlkanal 31 eine konstante Höhe aufweisen.

Die erfindungsgemäss optimierte Leitschaufel 20 wird bevorzugt in einer Gasturbine mit sequentieller Verbrennung eingesetzt, die in Strömungsrichtung hintereinander zwei Brennkammern mit jeweils einer nachfolgenden Turbine aufweist. Die Leitschaufel ist dabei in der zweiten Turbine angeordnet, die in Strömungsrichtung hintereinander mehrere Reihen von Leitschaufeln hat, wobei die Leitschaufel in einer mittleren Leitschaufelreihe angeordnet ist.

### Bezugszeichenliste

- 10: Gasturbine
- 11: Verdichter
- 12, 16: Brennstoffzufuhr
- 13: EV-Brenner
- 14, 17: Brennkammer
- 15: Hochdruckturbine
- 18: Niederdruckturbine
- 19: Achse
- 20, 20': Leitschaufel
- 21: Deckplatte
- 22: Schaufelblatt
- 23: Schaufelkopf
- 24, 25: Befestigungselement (hakenförmig)
- 26: Dichtungsnut
- 27: Vorderkante
- 28: Hinterkante
- 29: Kühlschlitz
- 30, 31, 32: Kühlkanal
- 33, 34: Umlenkbereich
- 35, 36: Umlenkelement
- 37: Kühllufteintritt
- 38: Drosselelement (plattenförmig)
- 39: Drosselvorrichtung (rippenförmig)
- 40: Blockierelement und/oder Steuerungselement
- 41, 42, 43: Turbulator-Rippe
- 44: Nocke
- 45: Heissgasstrom
- 46: Druckseite (Schaufelblatt)
- Am1, Am2, Am3: Querschnittsfläche (Schaufelmitte)
- Ab1,..,Ab5: Querschnittsfläche (Umlenkbereich)

## Patentansprüche

1. Leitschaufel (20) für eine Gasturbine (10), welche Leitschaufel (20) ein sich in radialer Richtung zwischen einem Schaufelkopf (23) und einer Deckplatte (21) erstreckendes Schaufelblatt (22) aufweist, in dessen Innerem drei in radialer Richtung verlaufende Kühlkanäle (30, 31, 32) vorgesehen sind, die in Richtung des Heißgasstroms (45) hintereinander angeordnet und durch an den Enden des Schaufelblattes (22) angeordnete Umlenkbereiche (33, 34) so miteinander verbunden sind, dass das Kühlmedium die drei Kühlkanäle (30, 31, 32) nacheinander in wechselnder Richtung durchströmt und anschliessend aus der Leitschaufel (20) in den durch die Turbine strömenden Heissgasstrom (45) austritt, wobei das Schaufelblatt (22) in radialer Richtung eine im Raum stark gekrümmte Form aufweist, wobei die Kühlkanäle (31, 32, 33) in radialer Richtung der Krümmung des Schaufelblattes (22) im Raum folgen, **dadurch gekennzeichnet, dass** die drei Kühlkanäle (31, 32, 33) auf halber Höhe der Leitschaufel (20) Querschnittsflächen (Am1, Am2, Am3) aufweisen, die in einem Verhältnis 1:2:1 stehen und dass der dritte Kühlkanal (32) eine in radialer Richtung von aussen nach innen abnehmende Querschnittsfläche aufweist, wobei die Rate der Abnahme der Querschnittsfläche von aussen nach innen über die ersten 70% der Kanallänge geringer ist als über die letzten 30%.

2. Leitschaufel nach Anspruch 1, **dadurch gekennzeichnet, dass** der Eingang des ersten Kühlkanals (30) über einen durch die Deckplatte (21) hindurch reichenden Kühllufteintritt (37) mit dem oberhalb der Deckplatte (21) liegenden Aussenraum in Verbindung steht, und dass im Bereich des Kühllufteintritts (37) ein Drosselelement (38) zur Drosselung des durch den Kühllufteintritt (37) strömenden Kühlmedium-Massenstroms angeordnet ist.

3. Leitschaufel nach Anspruch 2, **dadurch gekennzeichnet, dass** das Drosselelement (38) die Form einer durch eine oder mehrere Öffnungen versehenen Platte aufweist, dass das Drosselelement den Eingang des Kühllufteintritts (37) verschliesst, dass das Drosselelement (38) in die Deckplatte (21) eingelötet ist

4. Leitschaufel nach einem der Ansprüche 1 bis 3, **dadurch gekennzeichnet, dass** das Ende des ersten Kühlkanals (30) mit dem Anfang des zweiten Kühlkanals (31) durch einen ersten Umlenkbereich (33) verbunden ist, und dass die Querschnittsfläche (Ab2) am Eingang des zweiten Kühlkanals (31) grösser ist als die Querschnittsfläche (Ab1) am Ausgang des ersten Kühlkanals (30).

5. Leitschaufel nach Anspruch 4, **dadurch gekennzeichnet, dass** das Verhältnis der Querschnittsfläche (Ab2) am Eingang des zweiten Kühlkanals (31) zur Querschnittsfläche (Ab1) am Ausgang des ersten Kühlkanals (30) etwa 1,6 beträgt.

6. Leitschaufel nach einem der Ansprüche 1 bis 5, **dadurch gekennzeichnet, dass** das Ende des zweiten Kühlkanals (31) mit dem Anfang des dritten Kühlkanals (32) durch einen zweiten Umlenkbereich (34) verbunden ist, dass am zweiten Umlenkbereich (34) eine Drosselvorrichtung (39) zur gesteuerten Entnahme von Kühlmedium für die Kühlung der äusseren Plattform (21) und eines Teils der Hinterkante (28) vorgesehen ist, und dass die Querschnittsfläche (Ab4) am Eingang des dritten Kühlkanals (32) kleiner ist als die Querschnittsfläche (Ab3) am Ausgang des zweiten Kühlkanals (31).

7. Leitschaufel nach Anspruch 6, **dadurch gekennzeichnet**, und dass das Verhältnis der Querschnittsfläche (Ab4) am Eingang des dritten Kühlkanals (32) zur Querschnittsfläche (Ab3) am Ausgang des zweiten Kühlkanals (31) etwa 0,9 beträgt.

8. Leitschaufel nach Anspruch 6 oder 7, **dadurch gekennzeichnet, dass** die Drosselvorrichtung (39) mehrere quer zur Durchlassrichtung orientierte Rippen umfasst.

9. Leitschaufel nach Anspruch 4, **dadurch gekennzeichnet, dass** zum Führen der Strömung im ersten Umlenkbereich (33) ein vom Ende des ersten Kühlkanals (30) bis zum Anfang des zweiten Kühlkanals (31) verlaufendes bogenförmiges Umlenkelement (35) angeordnet ist, und dass das Umlenkelement (35) die Querschnittsfläche (Ab1) am Ausgang des ersten Kühlkanals (30) und die Querschnittsfläche (Ab2) am Eingang des zweiten Kühlkanals (31) jeweils in zwei Teilflächen von etwa 33% und 66% der Gesamtfläche unterteilt.

10. Leitschaufel nach Anspruch 5, **dadurch gekennzeichnet, dass** zum Führen der Strömung im zweiten Umlenkbereich (34) zwei zwischen der Mitte des zweiten Umlenkbereichs (34) und dem Anfang des dritten Kühlkanals (32) verlaufende bogenförmige Umlenkelemente (36) angeordnet sind, und dass die Umlenkelemente (36) die Querschnittsfläche (Ab5) der Mitte des zweiten Umlenkbereichs (34) in drei Teilflächen von jeweils etwa 33% der Gesamtfläche und die Querschnittsfläche (Ab4) am Eingang des dritten Kühlkanals (32) in drei Teilflächen von etwa 36%, 36% und 28% der Gesamtfläche unterteilen.

11. Leitschaufel nach einem der Ansprüche 1 bis 10, **dadurch gekennzeichnet, dass** sich das Schaufelblatt (22) in Strömungsrichtung des Heissgasstromes (45) von einer Vorderkante (27) bis zu einer Hinterkante (28) erstreckt, dass das Schaufelblatt (22) eine Druckseite (46) und eine Saugseite aufweist, und dass auf der Druckseite (46) vor der Hinterkante (28) ein parallel zur Hinterkante (28) verlaufender Kühlschlitz (29) vorgesehen ist, durch welchen das Kühlmedium über die gesamte Länge der Leitschaufel (20) aus dem dritten Kühlkanal (32) austritt und die Hinterkante (28) der Leitschaufel (20) kühlt.

12. Leitschaufel nach Anspruch 11, **dadurch gekennzeichnet, dass** zur Einstellung des Kühlstromes durch den Kühlschlitz (29) im Kühlschlitz (29) in Längsrichtung verteilt Steuerungselemente (40) vorgesehen sind.

13. Leitschaufel nach Anspruch 12, **dadurch gekennzeichnet, dass** die Steuerungselemente (40) wenigstens zwei unterschiedliche Formen, insbesondere eine kreisrunde und eine tropfenartige, aufweisen und in Längsrichtung einfach oder mehrfach alternierend angeordnet sind.

14. Leitschaufel nach einem der Ansprüche 1 bis 13, **dadurch gekennzeichnet, dass** in den Kühlkanälen (30, 31, 32) zur Verbesserung der Kühlwirkung Turbulator-Rippen (41, 42, 43) angeordnet sind.

15. Leitschaufel nach Anspruch 14, **dadurch gekennzeichnet, dass** die Turbulator-Rippen (41, 42, 43) schräg zur Strömungsrichtung in den Kühlkanälen (30, 31, 32) angeordnet sind.

16. Leitschaufel nach Anspruch 14 oder 15, **dadurch gekennzeichnet, dass** der erste Kühlkanal (30) einen zur Vorderkante (27) spitz zulaufenden dreieckigen Querschnitt, der zweite Kühlkanal (31) einen rechteckigen Querschnitt und der dritte Kühlkanal einen zur Hinterkante (28) spitz zulaufenden dreieckigen Querschnitt aufweist, und dass die Turbulator-Rippen (41, 43) in dem ersten und dritten Kühlkanal (30, 32) zur Vorderkante (27) bzw. Hinterkante (28) hin flacher werden, und die Turbulator-Rippen (42) in dem zweiten Kühlkanal (31) eine konstante Höhe aufweisen.

17. Leitschaufel nach einem der Ansprüche 11 bis 13, **dadurch gekennzeichnet, dass** im Kühlschlitz (29) zur Verbesserung des Wärmeübergangs in der Fläche verteilt Nocken (44) vorgesehen sind.

18. Leitschaufel nach einem der Ansprüche 1 bis 17, **dadurch gekennzeichnet, dass** die Leitschaufel (20) für eine Gasturbine bestimmt ist.

19. Gasturbine mit einer Leitschaufel (20) nach einem der Ansprüche 1 bis 18 **dadurch gekennzeichnet, dass** die Gasturbine mit einer sequentiellen Verbrennung funktioniert und in Strömungsrichtung hintereinander zwei Brennkammern (14, 17) mit jeweils einer nachfolgenden Turbine (15, 18) aufweist, und dass die Leitschaufel (20) in der zweiten Turbine (18) angeordnet ist.

20. Gasturbine nach Anspruch 19, **dadurch gekennzeichnet, dass** in der zweiten Turbine (18) in Strömungsrichtung hintereinander mehrere Reihen von Leitschaufeln und Laufschaufeln vorgesehen sind, und dass die Leitschaufel (20) in einer mittleren Leitschaufelreihe zwischen zwei Laufschaufeln angeordnet ist.

## Claims

1. Stator vane (20) for a gas turbine (10), which stator vane (20) has a vane airfoil (22) which extends in the radial direction between a vane tip (23) and a shroud (21), with three cooling passages (30, 31, 32), which extend in the radial direction, being provided inside the vane airfoil, which are arranged in series in the direction of the hot gas flow (45) and are interconnected by means of deflection regions (33, 34), which are arranged at the ends of the vane airfoil (22), so that the cooling medium flows through the three cooling passages (30, 31, 32) one after the other, with change of direction and then discharges from the stator vane (20) into the hot gas flow (45) which flows through the turbine, the vane airfoil (22) having a curved shape in space in the radial direction, the cooling passages (30, 31, 32) following the curvature of the vane airfoil (22) in space in the radial direction, **characterized in that** the three cooling passages (30, 31, 32) have cross-sectional areas (Am1, Am2, Am3) halfway up the stator vane (20) which are in a ratio of 1:2:1, and **in that** the third cooling passage (32) has a cross-sectional area which reduces in the radial direction from the outside inwards, the rate of reduction of the cross-sectional area from the outside inwards being lower over the first 70% of the passage length than over the last 30%.

2. Stator vane according to Claim 1, **characterized in that** the entry of the first cooling passage (30), via a cooling air inlet (37) which extends through the shroud (21), is in communication with the outer space which lies above the shroud (21), and **in that** a throttling element (38), for throttling the mass flow of cooling medium which flows through the cooling air inlet (37), is arranged in the region of the cooling air inlet (37).

3. Stator vane according to Claim 2, **characterized in that** the throttling element (38) has the form of a plate which is provided with one or more openings, **in that** the throttling element closes off the entry of the cooling air inlet (37), and **in that** the throttling element (38) is soldered into the shroud (21).

4. Stator vane according to one of Claims 1 to 3, **characterized in that** the end of the first cooling passage (30) is connected to the start of the second cooling passage (31) by means of a first deflection region (33), and **in that** the cross-sectional area (Ab2) at the entry of the second cooling passage (31) is larger than the cross-sectional area (Ab1) at the outlet of the first cooling passage (30).

5. Stator vane according to Claim 4, **characterized in that** the ratio of the cross-sectional area (Ab2) at the entry of the second cooling passage (31) to the cross-sectional area (Ab1) at the outlet of the first cooling passage (30) is about 1.6.

6. Stator vane according to one of Claims 1 to 5, **characterized in that** the end of the second cooling passage (31) is connected to the start of the third cooling passage (32) by means of a second deflection region (34), **in that** a throttling device (39), for the controlled extraction of cooling medium for the cooling of the outer platform (21) and of a part of the trailing edge (28), is provided in the second deflection region (34), and **in that** the cross-sectional area (Ab4) at the entry of the third cooling passage (32) is smaller than the cross-sectional area (Ab3) at the outlet of the second cooling passage (31).

7. Stator vane according to Claim 6, **characterized in that** the ratio of the cross-sectional area (Ab4) at the entry of the third cooling passage (32) to the cross-sectional area (Ab3) at the outlet of the second cooling passage (31) is about 0.9.

8. Stator vane according to Claim 6 or 7, **characterized in that** the throttling device (39) comprises a plurality of ribs which are oriented transversely to the throughput direction.

9. Stator vane according to Claim 4, **characterized in that** for guiding the flow, an arc-shaped deflection element (35), which extends from the end of the first cooling passage (30) to the start of the second cooling passage (31), is arranged in the first deflection region (33), and **in that** the deflection element (35) divides the cross-sectional area (Ab1) at the outlet of the first cooling passage (30) and the cross-sectional area (Ab2) at the entry of the second cooling passage (31) in each case into two sub-areas of about 33% and 66% of the overall area.

10. Stator vane according to Claim 5, **characterized in that** for guiding the flow, two arc-shaped deflection elements (36), which extend between the middle of the second deflection region (34) and the start of the third cooling passage (32), are arranged in the second deflection region (34), and **in that** the deflection elements (36) divide the cross-sectional area (Ab5) of the middle of the second deflection region (34) into three sub-areas of about 33% of the overall area in each case, and divide the cross-sectional area (Ab4) at the entry of the third cooling passage (32) into three sub-areas of about 36%, 36% and 28% of the overall area.

11. Stator vane according to one of Claims 1 to 10, **characterized in that** the vane airfoil (22) extends from a leading edge (27) to a trailing edge (28) in the flow direction of the hot gas flow (45), **in that** the vane airfoil (22) has a pressure side (46) and a suction side, and **in that** on the pressure side (46), in front of the trailing edge (28), provision is made for a cooling slot (29) which extends parallel to the trailing edge (28) and through which the cooling medium discharges from the third cooling passage (32) over the entire length of the stator vane (20) and cools the trailing edge (28) of the stator vane (20).

12. Stator vane according to Claim 11, **characterized in that** for adjusting the cooling flow through the cooling slot (29) provision is made in the cooling slot (29) for control elements (40) which are distributed in the longitudinal direction.

13. Stator vane according to Claim 12, **characterized in that** the control elements (40) have at least two different shapes, especially a round shape and a teardrop-like shape, and are arranged in a singly or multiply alternating manner in the longitudinal direction.

14. Stator vane according to one of Claims 1 to 13, **characterized in that** turbulator ribs (41, 42, 43) are arranged in the cooling passages (30, 31, 32) for improving the cooling effect.

15. Stator vane according to Claim 14, **characterized in that** the turbulator ribs (41, 42, 43) are arranged obliquely to the flow direction in the cooling passages (30, 31, 32).

16. Stator vane according to Claim 14 or 15, **characterized in that** the first cooling passage (30) has a triangular cross section which tapers towards the leading edge (27), the second cooling passage (31) has a rectangular cross section, and the third cooling passage has a triangular cross section which tapers towards the trailing edge (28), and **in that** the turbulator ribs (41, 43) in the first and third cooling passages (30, 32) become flatter towards the leading edge (27) or trailing edge (28), as the case may be, and **in that** the turbulator ribs (42) in the second cooling passage (31) have a constant height.

17. Stator vane according to one of Claims 11 to 13, **characterized in that** cams (44), which are distributed over the surface, are provided in the cooling slot (29) for improving the transfer of heat.

18. Stator vane according to one of Claims 1 to 17, **characterized in that** the stator vane (20) is intended for a gas turbine.

19. Gas turbine with a stator vane (20) according to one of Claims 1 to 18, **characterized in that** the gas turbine functions with sequential combustion and has two combustion chambers (14, 17) in series in the flow direction, with a subsequent turbine (15, 18) in each case, and **in that** the stator vane (20) is arranged in the second turbine (18).

20. Gas turbine according to Claim 19, **characterized in that** provision is made in the second turbine (18) for a plurality of rows of stator vanes and rotor blades in series in the flow direction, and **in that** the stator vane (20) is arranged in a middle stator vane row between two rotor blades.

## Revendications

1. Aube directrice (20) pour une turbine à gaz (10), laquelle aube directrice (20) présente une pale d'aube (22) s'étendant dans la direction radiale entre une tête d'aube (23) et une plaque de recouvrement (21), à l'intérieur de laquelle pale d'aube sont prévus trois canaux de refroidissement (30, 31, 32) s'étendant dans la direction radiale, lesquels sont disposés les uns derrière les autres dans la direction du flux de gaz chaud (45) et sont connectés les uns aux autres par des régions de déflexion (33, 34) disposées aux extrémités de la pale d'aube (22), de telle sorte que le fluide de refroidissement traverse les trois canaux de refroidissement (30, 31, 32) les uns après les autres dans une direction alternée et sorte ensuite hors de l'aube directrice (20) dans le flux de gaz chaud (45) s'écoulant à travers la turbine, la pale d'aube (22) présentant dans la direction radiale une forme fortement courbée dans l'espace, les canaux de refroidissement (30, 31, 32) suivant, dans la direction radiale, la courbure de la pale d'aube (22) dans l'espace, **caractérisée en ce que** les trois canaux de refroidissement (30, 31, 32) présentent, à mi-hauteur de l'aube directrice (20), des surfaces en section transversale (Am1, Am2, Am3) qui sont dans un rapport de 1:2:1 et **en ce que** le troisième canal de refroidissement (32) présente une surface en section transversale diminuant de l'extérieur vers l'intérieur dans la direction radiale, le taux de diminution de l'extérieur vers l'intérieur de la surface en section transversale étant, sur les premiers 70 % de la longueur du canal, inférieur à celui sur les derniers 30 %.

2. Aube directrice selon la revendication 1, **caractérisée en ce que** l'entrée du premier canal de refroidissement (30) est en liaison par le biais d'une entrée d'air de refroidissement (37) s'étendant à travers la plaque de recouvrement (21) avec l'espace extérieur situé au-dessus de la plaque de recouvrement (21), et **en ce qu'**un élément d'étranglement (38) pour l'étranglement du débit massique de fluide de refroidissement s'écoulant à travers l'entrée d'air de refroidissement (37) est disposé dans la région de l'entrée d'air de refroidissement (37).

3. Aube directrice selon la revendication 2, **caractérisée en ce que** l'élément d'étranglement (38) présente la forme d'une plaque pourvue d'une ou de plusieurs ouvertures, **en ce que** l'élément d'étranglement ferme l'entrée de l'entrée d'air de refroidissement (37), et **en ce que** l'élément d'étranglement (38) est brasé dans la plaque de recouvrement (21).

4. Aube directrice selon l'une quelconque des revendications 1 à 3, **caractérisée en ce que** l'extrémité du premier canal de refroidissement (30) est connectée au début du deuxième canal de refroidissement (31) par une première région de déflexion (33), et **en ce que** la surface en section transversale (Ab2) est plus grande à l'entrée du deuxième canal de refroidissement (31) que la surface en section transversale (Ab1) à la sortie du premier canal de refroidissement (30).

5. Aube directrice selon la revendication 4, **caractérisée en ce que** le rapport de la surface en section transversale (Ab2) à l'entrée du deuxième canal de refroidissement (31) par rapport à la surface en section transversale (Ab1) à la sortie du premier canal de refroidissement (30) vaut approximativement 1,6.

6. Aube directrice selon l'une quelconque des revendications 1 à 5, **caractérisée en ce que** l'extrémité du deuxième canal de refroidissement (31) est connectée au début du troisième canal de refroidissement (32) par une deuxième région de déflexion (34), **en ce qu'**un dispositif d'étranglement (39) pour prélever de manière commandée du fluide de refroidissement pour le refroidissement de la plate-forme extérieure (21) et d'une partie de l'arête arrière (28) est prévu au niveau de la deuxième région de déflexion (34), et **en ce que** la surface en section transversale (Ab4) à l'entrée du troisième canal de refroidissement (32) est inférieure à la surface en section transversale (Ab3) à la sortie du deuxième canal de refroidissement (31).

7. Aube directrice selon la revendication 6, **caractérisée en ce que** le rapport de la surface en section transversale (Ab4) à l'entrée du troisième canal de refroidissement (32) à la surface en section transversale (Ab3) à la sortie du deuxième canal de refroidissement (31) vaut approximativement 0,9.

8. Aube directrice selon la revendication 6 ou 7, **caractérisée en ce que** le dispositif d'étranglement (39) comprend plusieurs nervures orientées transversalement par rapport à la direction de passage.

9. Aube directrice selon la revendication 4, **caractérisée en ce que**, pour le guidage de l'écoulement, un élément de déflexion de forme arquée (35) s'étendant depuis l'extrémité du premier canal de refroidissement (30) jusqu'au début du deuxième canal de refroidissement (31) est disposé dans la première région de déflexion (33), et **en ce que** l'élément de déflexion (35) divise la surface en section transversale (Ab1) à la sortie du premier canal de refroidissement (30) et la surface en section transversale (Ab2) à l'entrée du deuxième canal de refroidissement (31) à chaque fois en deux surfaces partielles d'environ 33 % et 66 % de la surface totale.

10. Aube directrice selon la revendication 5, **caractérisée en ce que**, pour le guidage de l'écoulement, deux éléments de déflexion de forme arquée (36) s'étendant entre le centre de la deuxième région de déflexion (34) et le début du troisième canal de refroidissement (32) sont disposés dans la deuxième région de déflexion (34), et **en ce que** les éléments de déflexion (36) divisent la surface en section transversale (Ab5) du centre de la deuxième région de déflexion (34) en trois surfaces partielles de chacune environ 33 % de la surface totale, et la surface en section transversale (Ab4) à l'entrée du troisième canal de refroidissement (32) en trois surfaces partielles d'environ 36 %, 36 % et 28 % de la surface totale.

11. Aube directrice selon l'une quelconque des revendications 1 à 10, **caractérisée en ce que** la pale d'aube (22) s'étend dans la direction d'écoulement du flux de gaz chaud (45) depuis une arête avant (27) jusqu'à une arête arrière (28), **en ce que** la pale d'aube (22) présente un côté de pression (46) et un côté d'aspiration, et **en ce qu'**une fente de refroidissement (29) s'étendant parallèlement à l'arête arrière (28) est prévue sur le côté de pression (46) avant l'arête arrière (28), à travers laquelle fente de refroidissement le fluide de refroidissement sort sur toute la longueur de l'aube directrice (20) hors du troisième canal de refroidissement (32) et refroidit l'arête arrière (28) de l'aube directrice (20).

12. Aube directrice selon la revendication 11, **caractérisée en ce que**, pour l'ajustement du flux de refroidissement à travers la fente de refroidissement (29), des éléments de commande (40) répartis dans la direction longitudinale sont prévus dans la fente de refroidissement (29).

13. Aube directrice selon la revendication 12, **caractérisée en ce que** les éléments de commande (40) présentent au moins deux formes différentes, en particulier une forme circulaire et une forme en forme de goutte, et sont disposés dans la direction longitudinale en alternant une fois ou plusieurs fois.

14. Aube directrice selon l'une quelconque des revendications 1 à 13, **caractérisée en ce que** dans les canaux de refroidissement (30, 31, 32) sont disposées des nervures de turbulateur (41, 42, 43) pour améliorer l'effet de refroidissement.

15. Aube directrice selon la revendication 14, **caractérisée en ce que** les nervures de turbulateur (41, 42, 43) sont disposées obliquement par rapport à la direction d'écoulement dans les canaux de refroidissement (30, 31, 32).

16. Aube directrice selon la revendication 14 ou 15, **caractérisée en ce que** le premier canal de refroidissement (30) présente une section transversale triangulaire se terminant en pointe vers l'arête avant (27), le deuxième canal de refroidissement (31) présente une section transversale rectangulaire et le troisième canal de refroidissement présente une section transversale triangulaire se terminant en pointe vers l'arête arrière (28), et **en ce que** les nervures de turbulateur (41, 43) dans le premier et le troisième canal de refroidissement (30, 32) deviennent de plus en plus plates en direction de l'arête avant (27), respectivement de l'arête arrière (28), et les nervures de turbulateur (42) présentent une hauteur constante dans le deuxième canal de refroidissement (31).

17. Aube directrice selon l'une quelconque des revendications 11 à 13, **caractérisée en ce que** des cames (44) réparties dans la surface sont prévues dans la fente de refroidissement (29) pour améliorer le transfert thermique.

18. Aube directrice selon l'une quelconque des revendications 1 à 17, **caractérisée en ce que** l'aube directrice (20) est prévue pour une turbine à gaz.

19. Turbine à gaz comprenant une aube directrice (20) selon l'une quelconque des revendications 1 à 18, **caractérisée en ce que** la turbine à gaz fonctionne avec une combustion séquentielle et présente deux chambres de combustion (14, 17) disposées l'une derrière l'autre dans la direction de l'écoulement, avec à chaque fois une turbine aval (15, 18), et **en ce que** l'aube directrice (20) est disposée dans la deuxième turbine (18).

20. Turbine à gaz selon la revendication 19, **caractérisée en ce que** plusieurs rangées d'aubes directrices et d'aubes mobiles sont prévues les unes derrière les autres dans la direction de l'écoulement dans la deuxième turbine (18), et **en ce que** l'aube directrice (20) est disposée dans une rangée centrale d'aubes directrices entre deux aubes mobiles.
